# EUROPEAN PATENT APPLICATION

(11) **EP 4 723 570 A1**
(43) Date of publication of application: **08.04.2026**
(21) Application number: 24830282.0
(22) Date of filing: 21.05.2024
(51) Int. Cl.: H04L 41/042

(54) **NODE-TYPE EDGE COMPUTING SYSTEM**

(30) Priority: 30.06.2023 CN 202310790279
(71) Applicant: Sothis Cic Tech (Shanghai) Co., Ltd, Shanghai 201814 (CN)
(72) Inventor: JIANG, Weidong, Shanghai 201814 (CN); XU, Shenglin, Shanghai 201814 (CN)
(74) Representative: Canzler & Bergmeier Patentanwälte Partnerschaft mbB
(86) International application number: PCT/CN2024/094345
(87) International publication number: WO 2025/001634

(57) **Abstract**

Provided in the present invention is a node-type edge computing system. The system comprises a micro-service module, a CI/CD module, an application management module, an observation module and a security module. The node-type edge computing module in the present invention has the characteristics of having a low network delay, supporting mass data access, having an elastic infrastructure, etc. Moreover, in addition to reducing the transmission delay, the advantages brought about by shortening a spatial distance further comprise the delay of various PLCs, gateways, routing-transfer, and network device processing in a complex network is also reduced. In addition, since the probability of network link contention is greatly reduced, the overall delay can be significantly reduced. By means of the node-type edge computing module, a distributed capability is added to a traditional cloud center, some service logic is deployed on an edge side, and related data processing is completed, such that the pressure of transmitting data back to a center cloud can be greatly relieved. The node-type edge computing module can also provide an elastic virtualization capability, such as calculation, networking and storage, based on an edge location, and can truly realize "cloud-edge collaboration".

## Description

### FIELD OF TECHNOLOGY

The present disclosure relates to the field of cloud computing technology, and in particular to a node-type edge computing system.

### BACKGROUND

Currently, cloud computing has evolved to the next technological stage, namely extending cloud computing capabilities to the edge closer to manufacturing equipment, and realizing the downward deployment of cloud services through unified management and control of the cloud, the edge, and terminals, thereby providing end-to-end cloud services. Accordingly, the concept of edge cloud computing has emerged. Edge cloud computing is a cloud computing platform constructed on basic production equipment, based on the core technologies of cloud computing and the capabilities of edge computing. It forms an elastic cloud platform at the edge of production equipment, providing comprehensive capabilities including computing, networking, storage, and security, and establishes an end-to-end technical architecture of "cloud-edge-terminal tri-party collaboration" together with a central cloud and Internet of Things (IoT) terminals. Through node-type edge computing modules, tasks such as network forwarding, storage, computing, and intelligent data analysis are processed at the equipment edge, thereby reducing response latency, alleviating pressure on the cloud, lowering bandwidth costs, and providing cloud services such as global scheduling and computing power distribution. The central cloud and the node-type edge computing modules cooperate with each other to realize center-edge collaboration, global computing power scheduling, and unified management and control across the entire network, thereby truly achieving a ubiquitous cloud. Edge cloud computing may further deploy node-type edge computing modules on devices closest to terminals through a distributed architecture, so as to provide targeted computing power for terminal-side data sources. A portion of data processing can be completed at the device edge, while another portion can be processed and then transmitted back to the central cloud or to edge computing modules on the network side. Meanwhile, edge cloud computing provides a new form of elastic computing resources for terminal infrastructure through node-type edge computing modules, and cooperates with the central cloud to deliver cloud computing services that meet technical requirements of terminal facilities.

At present, the concept of cloud computing is primarily based on centralized resource management and control. Even when multiple data centers are interconnected, software and hardware resources are still treated as unified resources for management, scheduling, and commercialization. Consequently, for production line equipment, the real-time operability and fine-grained production capabilities required by manufacturing enterprises cannot be sufficiently satisfied by conventional cloud computing.

Merely relying on technological advances at the physical layer and transmission layer of wireless and fixed networks is insufficient to meet such requirements. Edge computing can effectively address these issues. In particular, the combination of edge computing and 5G can significantly reduce costs, and the capability of running more applications at the edge can further reduce the workload of the cloud.

Node-type edge computing modules are suitable for localized, real-time, and short-cycle data processing and analysis, and exhibit characteristics such as lightweight deployment and small-scale deep reinforcement learning. In large-scale production processes, such modules break the conventional pattern of "automation plus industrial software" and enable cross-domain integration of information technology (IT) and operational technology (OT). This not only avoids waste caused by functional overlap among industrial management software, but also eliminates issues such as inefficient communication and coordination between software systems or between industrial devices.

However, cloud computing in industrial production is associated with disadvantages such as poor data privacy, high security risks, and a tendency toward technical spillover.

In current manufacturing environments, industrial automation personnel (OT personnel) tend to emphasize control while lacking intelligence capabilities. As a result, human-machine interaction suffers from numerous discontinuities, workloads are heavy, and control accuracy is insufficient.

### SUMMARY

The present disclosure proposes a node-type edge computing system with full coverage, safety, stability, and high operation accuracy.

The node-type edge computing system comprises a microservice module, a CI/CD module, an application management module, an observation module, and a security module;
the microservice module comprises: service governance, canary release, circuit breaking, rate limiting, and intelligent routing;
the CI/CD module comprises: image repository management, image migration, security scanning, and a pipeline model;
the application management module comprises: application release, application deployment, version control, application repository management, and an application store;
the observation module comprises: cluster and application monitoring, cluster and application log management, alarm notification, audit log, event query, and metering and billing; and
the security module comprises: user management, role management, login authentication, key management, and network policy management.

Further, the application store supports installation of an edge node management component by downloading applications and installation components to provide support for edge devices;
the edge node employs a main chip having an ARM architecture, and the edge node management component has following functions:
supporting edge-edge cross-network communication;
supporting edge-central cloud cross-network communication;
supporting stable simultaneous operation of multiple Cloud Core and Edge Core instances;
supporting loT-gateway applications at an edge side;
supporting cloud-edge collaborative Al frameworks;
supporting edge-cloud collaborative training and inference;
using a standard service mesh for service governance and control; and
supporting cloud-edge collaborative monitoring.

Further, an application management component and an automatic orchestration algorithm are used to distribute and deploy componentized or microservitized applications to corresponding node-type edge computing modules through the application release and application deployment functions and the underlying edge node management component.

Further, a principle of the automatic orchestration algorithm is as follows: let W(1, 2, ...i, ...n) be an initial weight array, abbreviated as W, where W(i) is the initial weight of a microservice numbered i; selected microservices have an initial weight of 1; mandatory microservices have an initial weight of 1; and other microservices have an initial weight of 0; let D(1, 2, ...i, ...n) be a final weight array, abbreviated as D, where D(i) is the final weight of the microservice numbered i;
let R(i) be a list of associated microservices of the i-th microservice, abbreviated as R; let G(1, 2, ...i, ...n) be a processing flag array, abbreviated as G, initially all 0;
the automatic orchestration algorithm implements a mapping relationship of the function F(W, G, R) = D;
numbers having a weight of 1 in W are processed cyclically; for each such number, the numbers in R are processed cyclically and recursively; assuming a current number is j, G(j) is first checked, and if G(j) is already 1, no operation is performed and the next number is processed; otherwise, D(j) is set to 1, and G(j) corresponding to the processed number is changed from 0 to 1;
after all numbers having a weight of 1 in W have been processed, those numbers having a value of 1 in G constitute the set of microservices that need to be automatically orchestrated.

Further, an loT-gateway application is deployed on each of the node-type edge computing modules and operates on a Linux operating system based on an ARM architecture, so as to perform acquisition, storage, and forwarding of field-device data and to perform data processing or machine learning at an edge side; the loT-gateway application comprises following functions:
data acquisition: supporting multiple acquisition protocols comprising MODBUS RTU, MODBUS TCP, OPC UA, BACNet IP, TCP/IP, MQTT, WEBSOCKET, and HTTP;
data storage: acquired data is stored in memory and further persisted to a database; supporting multiple types of databases comprising cache databases, relational databases, and time-series databases, and having data processing and management capabilities;
data forwarding: supporting multiple forwarding protocols comprising OPC UA, TCP/IP, MQTT, WEBSOCKET, and HTTP;
having a programmable logic control (PLC) function and providing a corresponding programming environment, or being capable of communicating with a third-party PLC to control corresponding equipment through the third-party PLC.

Further, the edge node management component has a computing power of 2.3 TOPS or above, supports cloud-edge collaborative Al frameworks, receives data collected by loT-gateway applications on the node-type edge computing module, adopts edge-cloud collaborative training and inference to perform distributed heterogeneous parallel training, and fully utilizes the computing power of the edge module.

Compared with the related art, the present disclosure has the following advantages:
Full coverage: The distributed architecture of an edge cloud, implemented through industrial node-type edge computing modules, is capable of covering various production scenarios, thereby providing one-stop services and agile delivery capabilities.

Elastic scalability: On-demand provisioning is supported, thereby eliminating overpayment caused by partially overlapping functions of industrial software, satisfying elastic business scaling requirements, and reducing supply chain management, deployment, and capital investment costs associated with self-built systems.

Openness and flexibility: A standardized and open edge computing platform is provided, which can be conveniently interconnected with a central cloud system and allows flexible deployment of various applications according to business requirements.

Safety and stability: A secure and stable edge computing ecosystem is established based on an internal production system and core technologies, such that the system can be completely disconnected from external networks without affecting ongoing production rhythms.

Reduced latency: Whether through wired connections or industrial 5G, applications running on the node-type edge computing modules are capable of providing uninterrupted terminal access with a latency of less than 5 ms.

Localized business processing: By adopting a cloud-edge-terminal collaborative architecture, a large proportion of processing responses are performed locally, reducing terminal-to-cloud access frequency by more than 80%, thereby lowering costs, improving efficiency, and enhancing data privacy.

Cost reduction: After introducing the node-type edge computing modules, costs associated with computing, storage, and networking can be reduced by more than 30%.

Agile delivery: By deploying services based on the node-type edge computing modules, second-level agile service delivery can be achieved.

High security: Integrated security capabilities comparable to those of traditional cloud services are provided, comprising DDoS mitigation and blackhole protection, multi-tenant isolation, automatic detection and mitigation of abnormal traffic, and secure management and control channels between the central cloud and edge nodes.

Openness and ease of use: The system supports an open runtime environment, flexible deployment of cloud services and applications, online remote management, and visualized monitoring of operational metrics.

OEM standalone operation: For standalone equipment operated by OEM customers, no external network communication is required, and intelligent production decision-making is performed entirely through internal connectivity.

Intelligent optimization: By virtue of deep reinforcement learning capabilities integrated into the node-type edge computing modules, computational pressure on the central cloud or industrial main server clusters is reduced, while operational real-time performance and product quality accuracy are improved.

Integrated control and communication: The built-in PLC and intelligent gateway functions of the node-type edge computing module kernel render communication more secure, faster, and more reliable, while simplifying and enhancing control operations.

### BRIEF DESCRIPTION OF THE DRAWINGS

FIG.1 is a structural diagram of a node-type edge computing system according to an embodiment of the present disclosure.
FIG.2 is a schematic diagram of a Production Process Management (PPM) subsystem according to an embodiment of the present disclosure.

### DETAILED DESCRIPTION

The technical solutions of the present disclosure are further described below.

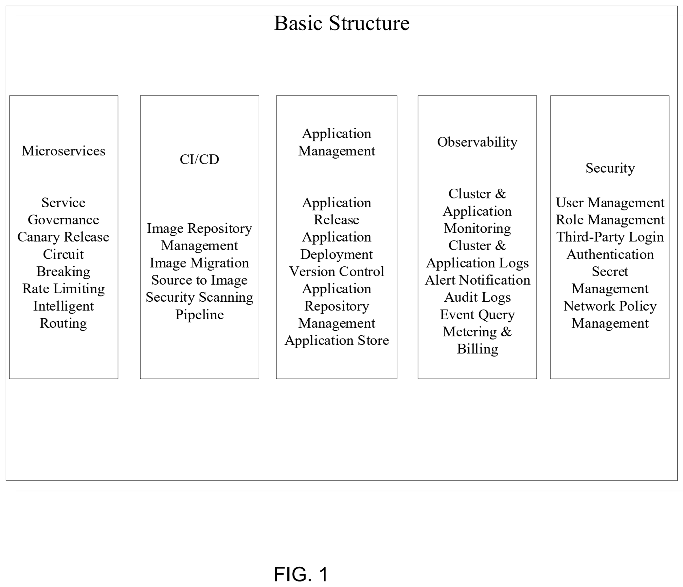

The present disclosure proposes a node-type edge computing system, as shown in FIG.1, comprising a microservice module, a CI/CD module, an application management module, an observation module, and a security module;
the microservice module comprises: service governance, canary release, circuit breaking, rate limiting, and intelligent routing;
the CI/CD module comprises: image repository management, image migration, security scanning, and a pipeline model;
the application management module comprises: application release, application deployment, version control, application repository management, and an application store;
the observation module comprises: cluster and application monitoring, cluster and application log management, alarm notification, audit log, event query, and metering and billing; and
the security module comprises: user management, role management, login authentication, key management, and network policy management.

The node-type edge computing system is a distributed operating platform for cloud-native applications, supporting multi-cloud and multi-cluster management, providing full-stack IT automated operation and maintenance capabilities, and simplifying DevOps workflows; it can easily enable plug-and-play integration of third-party applications with the platform. As a full-stack container platform, the node-type edge computing system provides an operation-friendly interface that can help users quickly build a powerful and feature-rich container cloud, providing users with multiple required functions: such as multi-cloud and multi-cluster management, Kubernetes resource management, DevOps, application lifecycle management, microservice governance, log query and acquisition, service and networking, multi-tenant management, monitoring and alarming, event and audit query, storage management, access control, edge node management, network policy, image repository management, and security management.

The application store supports a variety of applications and components; and allows the installation of edge node management component to enable support for edge devices. Edge nodes typically adopt main chips based on the ARM architecture. The edge node management component has the following basic functions:
supporting edge-edge cross-network communication;
supporting edge-central cloud cross-network communication;
supporting stable simultaneous operation of multiple Cloud Core and Edge Core instances;
supporting loT-gateway applications at an edge side;
supporting cloud-edge collaborative Al frameworks, such as KubeFlow/ PyTorch / MindSpore, etc.;
supporting edge-cloud collaborative training and inference;
using a standard service mesh for service governance and control; and
supporting cloud-edge collaborative monitoring.

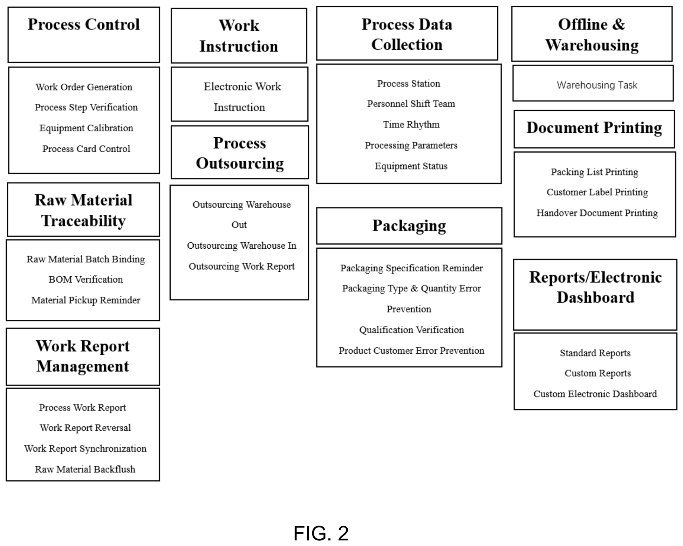

An application management component and an automatic orchestration algorithm are used to distribute and deploy componentized or microservitized applications to corresponding node-type edge computing modules through the application release and application deployment functions and the underlying edge node management component. Taking a Production Process Management (PPM) subsystem in the Manufacturing Execution System (MES) as an example, as shown in FIG.2, the PPM subsystem comprises multiple modules:
after the PPM subsystem is componentized or microservitized, deployment and management can be performed at a finer granularity; for example, the process data acquisition module can be deployed to the corresponding node-type edge computing module, facilitating more convenient beat control and adjustment of processing parameters.

The basic principle of the automatic orchestration algorithm is as follows:
let W(1, 2, ...i, ...n) be an initial weight array, abbreviated as W, where W(i) is the initial weight of a microservice numbered i; selected microservices have an initial weight of 1; mandatory microservices have an initial weight of 1; and other microservices have an initial weight of 0; let D(1, 2, ...i, ...n) be a final weight array, abbreviated as D, where D(i) is the final weight of the microservice numbered i;
let R(i) be a list of associated microservices of the i-th microservice, abbreviated as R; let G (1, 2, ...i, ...n) be a processing flag array, abbreviated as G, initially all 0;
the automatic orchestration algorithm implements a mapping relationship of the function F (W, G, R) = D;
numbers having a weight of 1 in W are processed cyclically; for each such number, the numbers in R are processed cyclically and recursively; assuming a current number is j, G(j) is first checked, and if G(j) is already 1, no operation is performed and the next number is processed; otherwise, D(j) is set to 1, and G(j) corresponding to the processed number is changed from 0 to 1;
after all numbers having a weight of 1 in W have been processed, those numbers having a value of 1 in G constitute the set of microservices that need to be automatically orchestrated.

Further, an loT-gateway application is deployed on each of the node-type edge computing modules and operates on a Linux operating system based on an ARM architecture, so as to perform acquisition, storage, and forwarding of field-device data and to perform data processing or machine learning at an edge side; the loT-gateway application comprises the following functions:
data acquisition: supporting multiple acquisition protocols comprising MODBUS RTU, MODBUS TCP, OPC UA, BACNet IP, TCP/IP, MQTT, WEBSOCKET, and HTTP;
data storage: acquired data is stored in memory and further persisted to a database; supporting multiple types of databases comprising cache databases, relational databases, and time-series databases, and having data processing and management capabilities;
data forwarding: supporting multiple forwarding protocols comprising OPC UA, TCP/IP, MQTT, WEBSOCKET, and HTTP, etc;
having a programmable logic control (PLC) function and providing a corresponding programming environment, or being capable of communicating with a third-party PLC to control corresponding equipment through the third-party PLC.

Further, the edge node management component has a computing power of 2.3 TOPS or above, supports cloud-edge collaborative Al frameworks, receives data collected by loT-gateway applications on the node-type edge computing module, adopts edge-cloud collaborative training and inference to perform distributed heterogeneous parallel training, and fully utilizes the computing power of the edge module.

According to different parallel principles and modes, mainstream types of parallelism in the industry comprise the following:
Data Parallelism: a parallel mode in which data are split, generally along a batch dimension, and distributed to respective computing units (workers) for model computation;
Model Parallelism: a parallel mode that splits the model; model parallelism may be divided into: operator-level model parallelism, pipeline model parallelism, optimizer model parallelism, etc.

Hybrid Parallelism: a parallel mode that combines both data parallelism and model parallelism.

Considering the edge application scenario of the present disclosure, a data-parallel mode is suitable. Based on this mode, a parameter server architecture is adopted, which is a widely used architecture in distributed training, with better flexibility, scalability, and node fault-tolerance capabilities. Specifically, the parameter server supports training algorithms based on both synchronous stochastic gradient descent (SGD) and asynchronous SGD; in terms of scalability, model computation and model update are respectively deployed in two types of processes, namely Worker (edge computing module) and Server, so that the resources of Worker and Server can be independently scaled horizontally by adding or removing Worker and Server resources; In addition, in large-scale data center environment, failures of computing devices, networks, or storage often occur, resulting in abnormal behavior of certain nodes. Under the parameter server architecture, such failures can be handled relatively easily without affecting ongoing training tasks.

In the architectural design of the parameter server, three independent components are included, namely a Server, a Worker, and a Scheduler, which respectively perform the following functions:
Server: stores model weights and gradients generated by backpropagation, and updates the model using an optimizer based on gradients uploaded from the Worker.
Worker: performs forward and backward computations of the network, uploads gradients generated by backpropagation to the Server through a Push interface, and downloads the updated model from the Server to the local Worker through the Pull interface;
Scheduler: Establishes and manages communication relationships between the Server and the Worker.

The implementation steps of distributed heterogeneous parallel training based on the parameter server architecture are as follows:
First, enabling a parameter server training mode;
then, initializing distributed training, comprising configuring networking among Server, Worker, and Scheduler nodes, and initializing collective communication;
controlling, by invoking interfaces, whether training parameters are updated through the parameter server, and configuring parameter initialization locations.
configuring, based on an original training script, all model weights to be trained and updated by the parameter server.
configuring, for large-scale data, an operator cache size and enabling a caching function under the parameter server training mode, training on a device using data tables having a size corresponding to the cache size, storing full datasets on the server, prefetching data tables required for training into the cache, and swapping expired data tables back to the server, thereby improving training performance; and
starting training by executing shell scripts corresponding to the Worker, Server, and Scheduler roles.

The above are only preferred embodiments of the present disclosure and do not have any restrictive effect on the present disclosure. Any person skilled in the art, within the scope not departing from the technical solution of the present disclosure, makes any form of equivalent replacement or modification to the technical solution and technical content disclosed by the present disclosure, which does not depart from the content of the technical solution of the present disclosure and still falls within the protection scope of the present disclosure.

## Claims

1. A node-type edge computing system, comprising: a microservice module, a CI/CD module, an application management module, an observation module, and a security module, wherein:
the microservice module comprises: service governance, canary release, circuit breaking, rate limiting, and intelligent routing;
the CI/CD module comprises: image repository management, image migration, security scanning, and a pipeline model;
the application management module comprises: application release, application deployment, version control, application repository management, and an application store;
the observation module comprises: cluster and application monitoring, cluster and application log management, alarm notification, audit log, event query, and metering and billing; and
the security module comprises: user management, role management, login authentication, key management, and network policy management.

2. The node-type edge computing system according to claim 1, wherein the application store supports installation of an edge node management component by downloading applications and installation components to provide support for edge devices;
wherein the edge node employs a main chip having an ARM architecture, and the edge node management component has following functions: supporting edge-edge cross-network communication; supporting edge-central cloud cross-network communication; supporting stable simultaneous operation of multiple Cloud Core and Edge Core instances; supporting loT-gateway applications at an edge side; supporting cloud-edge collaborative Al frameworks; supporting edge-cloud collaborative training and inference; using a standard service mesh for service governance and control; and supporting cloud-edge collaborative monitoring.

3. The node-type edge computing system according to claim 2, wherein an application management component and an automatic orchestration algorithm are used to distribute and deploy componentized or microservitized applications to corresponding node-type edge computing modules through the application release and application deployment functions and the underlying edge node management component.

4. The node-type edge computing system according to claim 3, wherein a principle of the automatic orchestration algorithm is as follows:
let W(1, 2, ...i, ...n) be an initial weight array, abbreviated as W, where W(i) is the initial weight of a microservice numbered i; selected microservices have an initial weight of 1; mandatory microservices have an initial weight of 1; and other microservices have an initial weight of 0; let D(1, 2, ...i, ...n) be a final weight array, abbreviated as D, where D(i) is the final weight of the microservice numbered i;
let R(i) be a list of associated microservices of the i-th microservice, abbreviated as R; let G(1, 2, ...i, ...n) be a processing flag array, abbreviated as G, initially all 0; the automatic orchestration algorithm implements a mapping relationship of the function F(W, G, R) = D;
numbers having a weight of 1 in W are processed cyclically; for each such number, the numbers in R are processed cyclically and recursively; assuming a current number is j, G(j) is first checked, and if G(j) is already 1, no operation is performed and the next number is processed; otherwise, D(j) is set to 1, and G(j) corresponding to the processed number is changed from 0 to 1; after all numbers having a weight of 1 in W have been processed, those numbers having a value of 1 in G constitute the set of microservices that need to be automatically orchestrated.

5. The node-type edge computing system according to claim 4, wherein an loT-gateway application is deployed on each of the node-type edge computing modules and operates on a Linux operating system based on an ARM architecture, so as to perform acquisition, storage, and forwarding of field-device data and to perform data processing or machine learning at an edge side; the loT-gateway application comprises following functions:
data acquisition: supporting multiple acquisition protocols comprising MODBUS RTU, MODBUS TCP, OPC UA, BACNet IP, TCP/IP, MQTT, WEBSOCKET, and HTTP;
data storage: acquired data is stored in memory and further persisted to a database; supporting multiple types of databases comprising cache databases, relational databases, and time-series databases, and having data processing and management capabilities;
data forwarding: supporting multiple forwarding protocols comprising OPC UA, TCP/IP, MQTT, WEBSOCKET, and HTTP; having a programmable logic control (PLC) function and providing a corresponding programming environment, or being capable of communicating with a third-party PLC to control corresponding equipment through the third-party PLC.

6. The node-type edge computing system according to claim 2, wherein the edge node management component has a computing power of 2.3 TOPS or above, supports cloud-edge collaborative Al frameworks, receives data collected by loT-gateway applications on the node-type edge computing module, adopts edge-cloud collaborative training and inference to perform distributed heterogeneous parallel training, and fully utilizes the computing power of the edge module.
